# EUROPÄISCHE PATENTSCHRIFT

(11) **EP 0 994 550 B1**
(45) Veröffentlichungstag und Bekanntmachung des Hinweises auf die Patenterteilung: **20.12.2006**
(21) Anmeldenummer: 99120240.9
(22) Anmeldetag: 11.10.1999
(51) Int. Cl.: H02K 1/27, H02K 15/03

(54) **Permanentmagneterregte Baugruppe einer elektrischen Maschine und Verfahren zu ihrer Herstellung**
Permanent magnet assembly for and electrical machine and method for its manufacturing
Assemblage à aimants permanents pour une machine électrique et méthode de construction de celui-ci

(30) Priorität: 12.10.1998 DE 19846924
(43) Veröffentlichungstag der Anmeldung: 19.04.2000
(73) Patentinhaber: VEM Sachsenwerk GmbH, 01242 Dresden (DE)
(72) Erfinder: Sabinski, Joachim, Dr.-Ing., 01169 Dresden (DE); Kuß, Hans, Prof.Dr.-Ing., 01109 Dresden (DE)
(74) Vertreter: Weissfloh, Ingo

(56) Entgegenhaltungen:
- EP-A- 0 013 157
- EP-A- 0 803 962
- US-A- 5 091 668

## Beschreibung

Die Erfindung betrifft eine permanentmagneterregte Baugruppe einer elektrischen Maschine und ein Verfahren zu ihrer Herstellung insbesondere einer Synchronmaschine mit ferromagnetischem Körper und darin angeordneten Permanentmagneten vorzugsweise für den Einsatz als kompakte Antricbslösungen.

Rotierende elektrische Maschinen, die mit Permanentmagneterregung arbeiten, sind zum einen als Transversalflußmaschinen bekannt Solcherart nach dem Transversalflußprinzip aufgebaute Maschinen können sowohl als Motor als auch als Generator betrieben werden. In der Regel besteht der Läufer aus einem oder mehreren axial aneinander gereihten, durch zwischenliegende Kunststoffringe oder aus einem anderen elektrisch nichtleitenden Material bestehende Ringe und/oder von einer Läuferscheibe voneinander getrennte, konzentrische Ringe, in denen am Umfang abwechselnd sogenannte Sammler- bzw. Weicheisenelemente angeordnet sind. Diese können üblicherweise aus axial aufgeschichtetem Elektroblech aufgebaut sein und daran sind Magnete angeordnet Diese konzentrischen Ringe werden auch als Polstruktur bezeichnet. Problematisch ist bei allen Transversalflußmaschinen die mechanische Festigkeit des Läuferaufbaues. Bekanntermaßen wird versucht die erforderliche Festigkeit durch Kleben zu erreichen, wobei zusätzlich diese Klebeverbindungen mit einfachen konstruktiven Elementen, wie beispielsweise Bolzen, Schrauben, Nieten usw. verfestigt werden. In zunehmenden Maße werden auch Bandagen auf der Läuferoberfläche eingesetzt, um die Fliehraftbeanspruchungen zu beherrschen. Ein Nachteil dieser zusätzlichen Elemente ist die beträchtliche Vergrößerung des Volumens des Läufers sowie der hohe Fertigungs- und Bearbeitungsaufwand. Zudem sind bei Anordnung der Sicherungselemente durch die Ringe hindurch entweder die Magnete in geteilter Form oder bei Durchführung bzw. Anordnung derartiger Elemente im Bereich der Weicheisenelemente diese einem hohen Bearbeitungs- und Fertigungsaufwand ausgesetzt. Weiterhin wird bei derartigen Ausführungen durch die Vergrößerung des Läufers in radialer Richtung, das die Kühlverhältnisse bestimmende Verhältnis Oberfläche/Volumen verschlechtert, wobei die Kühlung bei Transversalflußmaschinen ohnehin problematisch ist. In der DE-PS 195 35 256 ist eine Lösung beschrieben, bei der diese Nachteile vermieden werden sollen. Dabei sind eine Vielzahl von in axialer Richtung wirksame zusätzliche Zugelemente auf wenigstens einem Durchmesser außerhalb des durch die sogenannten Grenzdurchmesser eingeschlossenen Bereich vorgesehen. Allerdings erhöht sich der Fertigungsaufwand bei dieser Lösung gegenüber der geklebten Ausführung weiter.

In den vergangenen Jahren sind permanentmagnetisch erregte elektrische Maschinen immer höherer Leistung entwickelt worden, begünstigt durch konstruktive Maßnahmen, spezielle Steuerschaltungen mit höheren Schaltfrequenzen und in der Zwischenzeit verfügbar gewordenes Permanentmagnetmaterial hoher Energiedichte. Mittlerweile sind solche Leistungen erreicht, daß sich das Problem der Wirbelstromverluste erheblich negativ bemerkbar macht. Aus dem Elektromaschinenbau ist es allgemein bekannt, zur Vermeidung von Wirbelstromverlusten sowohl den Ständer als auch den Läufer geblecht auszuführen. In der DE-OS 196 48 758 ist eine permanentmagnetisch erregte elektrische Maschine mit einem ferromagnetischen Läuferrückschluß beschrieben, wo paketierte Blechronden und eine Art geschichtete Permanentmagnete zur Vermeidung von Wirbelstromverlusten eingesetzt werden. Dabei sind die Permanentmagnete sowohl bei der Außenläufer- als auch bei der Innenläufermaschine jeweils außerhalb am Umfang des Blechpaketes angeordnet Nachteilig ist hierbei, daß für Hochleistungsmaschinen der Fertigungsaufwand weiterhin hoch ist.

In der DE-OS 44 23 620 sind einzelne Permanentmagnete in einem zylindrischen Joch, das aus isotrophen Permanentmagnetmaterial besteht, angeordnet. Allerdings ist diese Ausführung nur für rotierende elektrische Maschinen sehr kleiner Leistungen geeignet. Der Läufer ist dabei als Glockenläufer ausgebildet.

Mehrere Permanentmagnete in einem zylindrischen Läuferkörper sind aus der DE-OS 40 33 454 bekannt. Allerdings wird dabei das Permanentmagnetmaterial aus Gründen der mechanischen Festigkeit eingespritzt. Diese Lösung schränkt den Einsatz moderner Permanentmagnetmaterialien hoher Energiedichte ein und ist nur für rotierende elektrische Maschinen kleiner Leistung geeignet. Durch die ausschließliche Verwendung von ferromagnetischen Material für den Läufergrundkörper erhöht sich der Streufeldanteil des Permanentmagneten. Dies bedingt einen höheren Einsatz von Permanentmagnetmaterial.

Die US-A-5091668 offenbart eine permanentmagneterregte Baugruppe einer elektrischen Maschine entsprechend dem Oberbegriff des Anspruchs 1.

Der Erfindung liegt die Aufgabe zugrunde, eine permanentmagneteiregte Baugruppe einer elektrischen Maschine zu schaffen, der die mechanische Festigkeit insgesamt und auch der Baugruppenbauteile verbessert, die Anzahl der Baugruppenbauteile verringert, den Wirkungsgrad der gesamten hochausgenutzten elektrischen Maschine verbessert und ein Verfahren zu ihrer Herstellung zu entwickeln, daß die Fertigungsaufwendungen verringert und eine seriengerechte Fertigung ermöglicht.

Erfindungsgemäß wird die Aufgabe durch die kennzeichnenden Merkmale der beiden ersten Patentansprüche gelöst Die erfindungsgemäße permanentmagneterregte Baugruppe und das Verfahren zu ihrer Herstellung bewirken eine Konstruktion, die den bewährten Prinzipien aus anderen Gebieten des Elektromaschinenbaus nahekommt. Insbesondere ist die mechanische Festigkeit der gesamten Konstruktion für harte Betriebsbedingungen geeignet. Die Betriebssicherheit und die Lebensdauer der mit den erfindungsgemäßen permanenhnameterregte Baugruppen hergestellten Antriebe kann nunmehr die Forderungen für diese Einsatzfälle erfüllen. Eine seriengerechte Herstellung mit bekannten Maschinen, Anlagen und Technologien des Elektromaschinenbaues ist durchführbar.

Die Erfindung soll nachstehend in einem Ausführungsbeispiel anhand der Zeichnung näher erläutert werden.

Es zeigen
Fig. 1 einen Teil einer erfindungsgemäßen permanentmagneterregte Baugruppe einer elektrischen Maschine, hier in der Ausführung eines Läufers einer rotierenden elektrischen Synchronmaschine im Querschnitt,
Fig. 2 einen Ausschnitt eines Blechpaketes mit dem schmalen, entfernbaren Steg und
Fig. 3 eine Ausführung als Außenläufermaschine.
Der erfindungsgemäße Läufer 1 einer permanentmagneterregten rotierenden elektrischen Synchronmaschine besteht aus an sich bekannten gestanzten einteiligen Blechronden oder Blechstreifen 2 (hier Läuferblechronden) mit Nuten 3 (hier Läufernuten) und Zähnen 4 (hier Läuferzähnen) und ist zusätzlich zum Rücken (hier Läuferwelle) hin mit Innennuten 5, vorzugsweise in Form eines Schwalbenschwanzes, hier mit dem schmalen Teil zur Läuferwelle hin, versehen. Die Zahl und Lage der Innennuten 5 ist den Nuten 3 (hier Läufernuten) für die Aufnahme der Permanentmagnete angepaßt. Andere Formen der Innennuten 5, z. B. oval, sind möglich.
Zunächst ist zwischen den Nuten 3 (hier Läufernuten) und den Innennuten 5 noch ein schmaler, entfernbarer Steg 9 angeordnet. Die vorgefertigten an sich bekannten einteiligen Blechronden oder Blechstreifen 2 (hier Läuferblechronden) mit erfindungsgemäßen schmalen, entfernbaren Stegen 9 zwischen Nut 3 (hier Läufernut) und Innennut 5 werden zu einem ferromagnetischen Körper (hier Läuferblechpaket) geschichtet.

Anschließend erfolgt ein Verfestigen der geschichteten Blechronden oder Blechstreifen 2 (hier Läuferblechpaket) untereinander mittels nichtferromagnetischem Material 6. Vorzugsweise wird das Verfestigen der geschichteten Blechronden oder Blechstreifen 2 (hier Läuferblechpaket) mittels eines Vergießens mit Aluminiumverguß durchgeführt.
In einer anderen Ausführungsform wird das Verfestigen mit nichtferromagnetischem Material 6 auf der Basis von in die Innennuten 5 eingelegten tränkbaren Glasfasermatten und darin eingebrachten speziell geformter vorzugsweise dreieckiger Glasfaserkeile durchgeführt. Nach dem Aushärten der Verfestigung werden die erfindungsgemäßen schmalen, entfernbaren Stege 9 entfernt, indem ein Ausfräsen der Nuten 3 (hier Läufernuten) bis auf das nichtferromagnetische Material 6, daß die Innennut 5 ausfüllt, erfolgt.

In die halboffenen Nuten 3 (hier Läufernuten) werden nun Permanentmagnete 7, die mit quellfähigen Material (in der Figur nicht dargestellt) vorzugsweise quellfähigen Glasfasermatten umhüllt sind, montiert. Dabei erfolgt des weiteren eine Abdeckung der offenen Nutteile (hier Läufernutteile). Im Inneren der geblechten Zähne 4 (hier Läufernutteile) sind im unteren Bereich zum Nutgrund (hier Läufernutgrund) hin, Öffnungen 8, die vorzugsweise trapezförmig und den äußeren Zahnformen angepaßt sind, angeordnet. Anschließend wird die vormontierte erfindungsgemäße permanentmagneterregte Baugruppe (hier der Läufer) mit aus dem Elektromaschinenbau bekannten Verfahren ausgehärtet Vorzugsweise wird die Aushärtung mit dem Vacuum pressure impragnation (VPI) Verfahren durchgeführt.

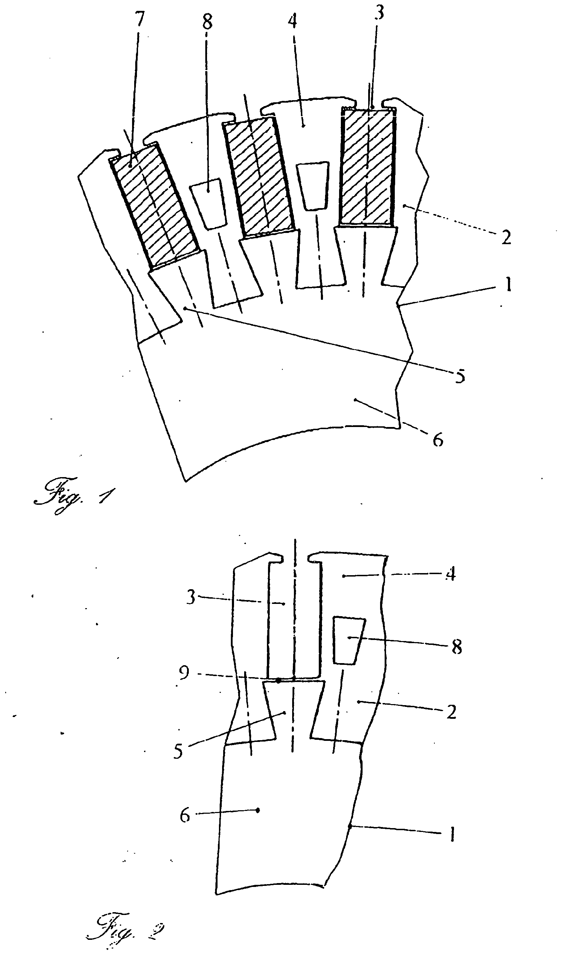

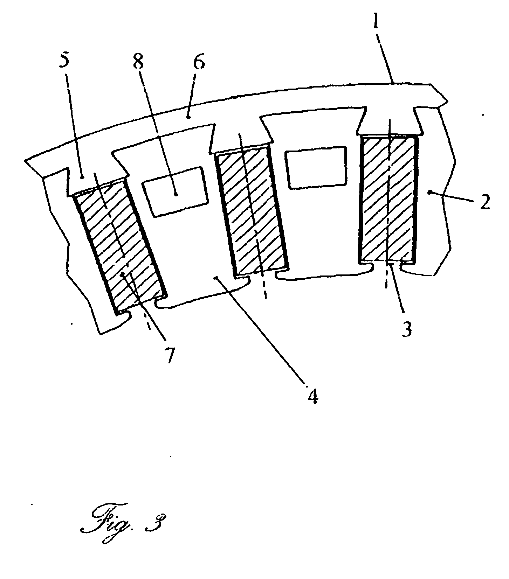

Figur 3 zeigt die Ausführung einer erfindungsgemäßen permanentmagneterregte Baugruppe als Außenläufer. Dabei liegen die erfindungsgemäßen Innennuten 5 außen und haben eine sehr geringe Tiefe. Die Verfestigung mittels nichtferromagnetischem Material 6 ergibt einen dünnwandigen geschlossenen zylindrischen gehäuseartigen Außenring. Vorzugsweise erfolgt die Verfestigung mittel Aluminiumverguß. Nach dem Aushärten werden die schmalen entfernbaren Stege mittels Ausfräsen entfernt und der Außenläufer analog wie beim Innenläufer weiter montiert und fertiggestellt.

In einer anderen Herstellungsvariante kann die Verfestigung mittels nichtferromagnetischem Material 6 als ein extra Verfestigungskörper gesondert hergestellt und die erfindungsgemäße permanentmagneterregte Baugruppe, hier Blechpaket aus einteiligen Blechronden einzeln in den Verfestigungskörper eingeklebt oder eingeschrumpft werden. Anstelle der Blechronden können die zahnartigen Einzelpole separat gefertigt und in den nichtferromagnetischen Verfestigungskörper einzeln eingefügt werden. Dazu muß der nichtferromagnetische Verfestigungskörper über eine entsprechende Anzahl Innennuten verfügen.

## Patentansprüche

1. Permanentmagneterregte Baugruppe einer elektrischen Maschine insbesondere einer Synchronmaschine mit einem zylindrischen oder linearen ferromagnetischen Körper und darin angeordneten Permanentmagneten (7), wobei,
in an sich bekannte gestanzte einteilige Blechronden oder Blechstreifen (2) mit Nuten (3) und Zähnen (4) zum Rücken der Blechronden oder des Blechstreifens (2) hin Innennuten (5), vorzugsweise in Form eines Schwalbenschwanzes, angeordnet sind, und
die Zahl und Lage der Innennuten (5) den Nuten (3) für die Aufname der Permanentmagnete (7) angepaßt ist, **dadurch gekennzeichnet, daß**
zwischen den Innennuten (5) und Nuten (3) nur ein schmaler, entfernbarer Steg (9) angeordnet ist,
daß das geschichtete Blechpaket mit nichtferromagnetischem Material (6) verfestigt ist,
daß in vorzugsweise halboffenen Nuten (3) Permanentmagnete (7) eingelegt sind,
diese Permanentmagnete (7) mit quellfähigen Material umhüllt sind
und im Inneren der geblechten Zähne (4) im unteren Bereich zum Nutgrund hin, Öffnungen (8), die vorzugsweise trapezförmig und den äußeren Zahnformen angepaßt sind, angeordnet sind.

2. Verfahren zur Herstellung einer permanectmagneterregten Baugruppe einer elektrischen Maschine insbesondere einer Synchronmaschine mit zylindrischen oder linearen ferromagnetischen Körper und darin angeordneten Permanentmagneten (7),
**dadurch gekennzeichnet,**
**daß** an sich bekannte einteilige Blechronden oder Blechstreifen (2) spezieller Form mit Nuten (3) und Zähnen (4) zu einem Blechpaket geschichtet werden,
anschließend ein Verfestigen der Blechronden oder Blechstreifen (2) untereinander mittels eines nichtferromagnetischen Materials (6), vorzugsweise ein Vergießen durchgeführt wird,
nach dem Verfestigen ein Entfernen der schmalen Stege (9), vorzugsweise durch Ausfräsen der Nuten (3) des ferromagnetischen Körpers bis auf das nichtferromagnetische Material (6) erfolgt, die Permanentmagnete (7) festgesetzt und vorzugsweise gleichzeitig mit quellfähigen Material montiert werden und ein anschließendes Aushärten mit aus dem Elektromaschinenbau bekannten Verfahren, vorzugsweise dem VPI- Verfahren durchgeführt wird.

3. Permanentmagneterregte Baugruppe einer elektrischen Maschine nach Anspruch 1,
**dadurch gekennzeichnet,**
**daß** das nichtferromagnetische Material (6) aus Aluminiumverguß besteht.

## Claims

1. A permanent-magnet-excited assembly of an electrical machine, in particular a synchronous machine, with a cylindrical or linear ferromagnetic body and permanent magnets (7) arranged therein,
wherein in stamped single-component circular sheet metal laminations or strips (2) of the type known per se, with slots (3) and teeth (4), internal slots (5) are arranged, facing the back of the circular sheet metal laminations or sheet metal strips (2) preferably in the form of a dovetail; the number and the position of the internal slots (5) are adapted to the slots (3) for receiving the permanent magnets (7); and only one narrow removable bridge (9) is arranged between the inner slots (5);
**characterized in**
**that** the laminated core is solidified with non-ferromagnetic material (6); that permanent magnets (7) are inserted in preferably semi-open slots (3), such permanent magnets being enveloped by material capable of swelling; and that openings (8) are arranged in the interior of the laminated teeth (4) in the lower zone facing the base of the slot, said openings (8) preferably being trapezoidal and being adapted to the external shape of the teeth.

2. A process for producing a permanent-magnet-excited assembly of an electrical machine, in particular of a synchronous machine, with a cylindrical or linear ferromagnetic body and permanent magnets arranged therein, **characterized in that** single-component circular sheet metal laminations or strips (2) of the type known per se and having a special shape with slots (3) and teeth (4) are stacked to form the laminated core; that the circular sheet metal laminations or strips (2) are subsequently solidified among each other by means of a non-ferromagnetic material (6), preferably by pouring said material into the laminated core; that following solidification, the narrow bridges (9) are removed preferably by milling the slots (3) of the ferromagnetic body down to the non-ferromagnetic material (6); that the permanent magnets (7) are fixed and preferably mounted at the same time with material capable of swelling; and that subsequent curing is carried out by methods known in the field of electrical machine construction, preferably by application of the VPI process.

3. The permanent-magnet-excited assembly of an electrical machine according to claim 1, **characterized in that** the non-ferromagnetic material (6) consists of cast aluminium.

## Revendications

1. Sous-groupe d'une machine électrique à excitation à aimant permanent, en particulier d'une machine synchrone ayant un corps cylindrique ou linéaire en matériau ferromagnétique et des aimants permanents qui sont disposés dans son intérieur (7),
des rainures intérieures (5), de préférence sous forme d'une queue d'aronde, étant disposées dans des tôles rondes et tôles en ruban (2) estampées monocorps généralement connues avec rainures (3) et dents (4) et le nombre et la position des rainures intérieures (5) ayant été adaptés à ceux-ci des rainures (3) qui servent à réceptionner les aimants permanents (7),
et une entretoise (9) étroite et démontable étant disposée entre les rainures intérieures (5) et rainures (3),
***caractérisée en ce que***
l'empilage de tôles est solidifié à l'aide d'un matériau non ferromagnétique (6), que des aimants permanents (7) sont insérés dans des rainures (3) semi-ouvertes de préférence, que ces aimants permanents (7) sont enveloppés d'un matériau capable de gonfler, et que des ouvertures (8) sont disposées dans l'intérieur des dents en tôle (4) se situant dans la partie inférieure et donnant sur le fond de rainure, qui ont de préférence une forme trapézoïdale et sont adaptés aux formes extérieures des dents.

2. Procédé visant à la fabrication d'un sous-groupe d'une machine électrique à excitation par aimant permanent, en particulier d'une machine synchrone ayant un corps cylindrique ou linéaire en matériau ferromagnétique et des aimants permanents qui sont disposés dans son intérieur (7),
***caractérisée en ce que***
des tôles rondes et tôles en ruban (2) estampées monocorps généralement connues ayant une forme particulière et étant munies de rainures (3) et de dents (4) sont empilées pour former un empilage de tôles,
ensuite il est effectué une consolidation des tôles rondes et tôles en ruban (2) entre eux à l'aide d'un matériau non ferromagnétique (6), de préférence par moulage, les entretoises étroites (9) étant enlevées après la consolidation, de préférence par fraisage des rainures (3) du corps ferromagnétique jusqu'à l'interface avec le matériau non ferromagnétique (6), les aimants permanents (7) étant fixés, et en même temps étant montés de préférence à l'aide d'un matériau capable de gonfler, et enfin un durcissement est effectué par le biais d'un procédé connu aux constructeurs de machines électriques, de préférence un procédé d'imprégnation sous pression sous vide.

3. Sous-groupe d'une machine électrique à excitation à aimant permanent selon la revendication 1, **caractérisé en ce que** le matériau non ferromagnétique (6) est composé de fonte en aluminium.
